# EUROPÄISCHE PATENTSCHRIFT

(11) **EP 1 514 466 B1**
(45) Veröffentlichungstag und Bekanntmachung des Hinweises auf die Patenterteilung: **30.05.2007**
(21) Anmeldenummer: 04019886.3
(22) Anmeldetag: 21.08.2004
(51) Int. Cl.: A01D 41/12

(54) **Häcksel- und Verteilvorrichtung**
Chopping and distributor device
Dispositif de coupe et de distribution

(30) Priorität: 15.09.2003 DE 10342922
(43) Veröffentlichungstag der Anmeldung: 16.03.2005
(60) Teilanmeldung: 06011616.7
(73) Patentinhaber: CLAAS Selbstfahrende Erntemaschinen GmbH, 33428 Harsewinkel (DE)
(72) Erfinder: Niermann, Martin, 33428 Harsewinkel (DE); Brinkmann, Jörn, 33428 Harsewinkel (DE); Strieker, Norbert, 33415 Verl (DE); Hugenroth, Ludger, 48346 Ostbevern (DE); Stiller, Thorsten, 32791 Lage (DE); Terörde, Stefan, 48231 Warendorf (DE)

(56) Entgegenhaltungen:
- EP-A- 1 442 649
- DE-C- 3 546 679
- FR-A- 2 787 285
- US-A1- 2002 086 722
- US-A1- 2002 189 220
- US-A1- 2003 162 576
- US-A1- 2004 127 271

## Beschreibung

Die Erfindungen betrifft ein Verfahren und eine Vorrichtung zum Betreiben einer mit einem Schneidwerk ausgestatteten selbstfahrenden Erntemaschine nach dem Oberbegriff des Anspruchs 1.

Aus der EP 0 212 337 ist eine Vorrichtung für Mähdrescher zum Verteilen von Stroh und Spreu bekannt. Bei dieser Vorrichtung sind zwei gegenläufig angetriebene Rotoren mit mehreren verstellbaren, schaufelartigen Blättern im hinteren Austragbereich des Mähdreschers nebeneinander um zueinander parallele Achsen drehbar gelagert. Beide Rotoren weisen an der Außenseite eine mechanisch verstellbare Teilummantelung auf, mit der der Streubereich der Vorrichtung begrenzt wird. Beide Rotoren werden gemeinsam über ein Getriebe mit der gleichen Drehzahl angetrieben.

Nachteilig bei dieser Vorrichtung ist, dass die Streubreite hinter dem Mähdrescher nur über die manuell einstellbare Ausrichtung der Rotoren und der Teilummantelungen bzw. der Einstellung der Drehzahl der Rotorblätter veränderbar ist, wobei das Stroh und die Spreu nicht gleichmäßig auf dem Feld verteilt werden.

Der Erfindung liegt daher die Aufgabe zugrunde einen Mähdrescher derart weiterzuentwickeln, dass die Streubreite automatisch an die Arbeitsbreite des Schneidwerks angepasst wird.

Diese Aufgabe wird erfindungsgemäß durch die kennzeichnenden Merkmale des Anspruch 1 gelöst.

Weitere vorteilhafte Wirkungen des Erfindungsgegenstandes ergeben sich aus den Unteransprüchen.

Indem der Antrieb zur Verstellung der wenigstens einen Abrisskante in Abhängigkeit von der Arbeitsbreite des Schneidwerks geregelt wird, kann die Streubreite in einfacher Weise automatisch an die Arbeitsbreite angepasst werden.

Vorteilhafterweise erfolgt die Verstellung der Abrisskante über ein elektrohydraulisches Stellglied, das mit einer Steuereinheit verbunden ist, so dass zum einen der Verstellbereich als auch die Verstellgeschwindigkeit der Abrisskante geregelt werden kann.

Indem die Verstellung des Stellgliedes vorteilhafterweise über einen Drehwinkelsensor detektiert wird, der mit der Steuereinheit verbunden ist, erhält die Steuerung ständig Information über die Position der Abrisskante.

Damit der mit vielfältigen Aufgaben betraute Fahrer entlastet wird, wird das Schneidwerk vorteilhafterweise über einen mit der Steuerung verbundenen Sensor detektiert, der ein der Arbeitsbreite des Schneidwerks entsprechendes Schneidwerksbreitensignal zur Steuereinheit gibt.

Ein in der Steuereinheit gespeichertes Kennfeld beinhaltet vorteilhafterweise mehrere Funktionskurven für verschiedene Schneidwerke. Mit dem der Schneidwerksbreite des Schneidwerks entsprechenden Schneidwerksbreitensignal wird die zugehörige Funktionskurve automatisch aus dem Kennfeld ausgewählt. Die optimalen Betriebparameter werden somit ohne zutun des Fahrers abgestimmt, was eine weitere Entlastung des Fahrers bedeutet.

Das Stellglied wird vorteilhafterweise über die zugehörige Funktionskurve geregelt, damit sich eine optimale Verteilung des Erntegutstroms über die automatisch eingestellte Streubreite ergibt.

Um weitere äußere Einflüsse in den Funktionskurven zu berücksichtigen, die Einfluss auf die Streubreite haben wie z. B. die Windrichtung und die Windstärke, können mit mit den Funktionskurven und den Störgrößen verzerrte Funktionskurven in der Steuereinheit berechnet werden.

Weitere vorteilhafte Ausführungen sind Gegenstand weiterer Unteransprüche und werden an Hand eines in mehreren Figuren dargestellten Ausführungsbeispiels beschrieben.

Es zeigen:
- Fig.1: eine schematische Draufsicht auf einen Mähdrescher bei der Erntefahrt,
- Fig.2: eine Seitenansicht eines rückwärtigen Ausschnittes eines Mähdreschers,
- Fig.3: eine Rückansicht auf einen Mähdrescher

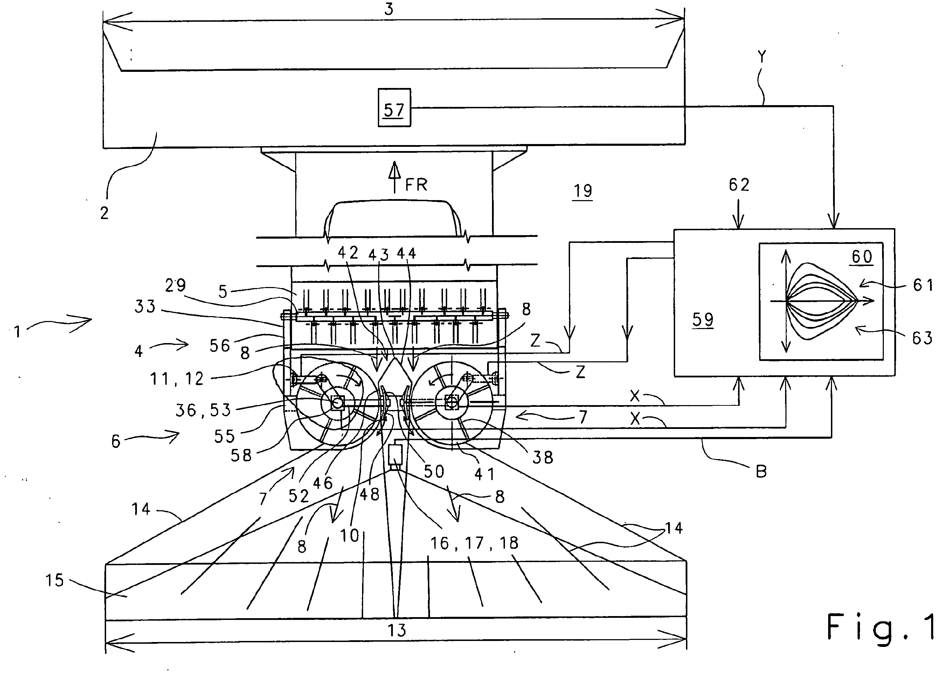

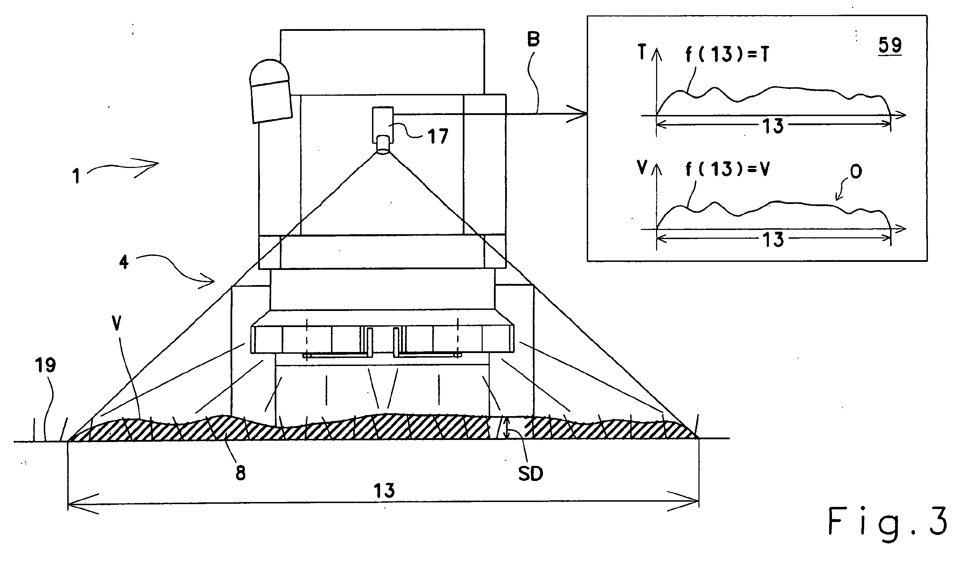

In Fig. 1 ist die schematische Draufsicht eines Mähdreschers 1 bei der Erntefahrt dargestellt. Mit einem frontseitig am Mähdrescher 1 angeordnetem Schneidwerk 2 mit einer Arbeitsbreite 3 wird das Erntegut auf dem Feld gemäht und anschließend an sich bekannten und daher hier nicht näher erläuterten Arbeitsorganen im Mähdrescher 1 zugeführt. Die Arbeitsorgane im Mähdrescher 1 trennen das Erntegut in Getreidekörner, Spreu und Stroh. An der Heckseite des Mähdreschers 1 ist eine Häcksel- und Verteileinrichtung 4 angeordnet, die aus einem Häckselorgan 5 besteht an die sich eine Verteileinrichtung 6 anschließt. Die Verteileinrichtung 6 besteht aus zwei Wurfgebläsen 7, die den vom Häckselorgan 5 zugeführten Erntegutstrom 8 radial verteilen. Die Wurfgebläse 7 sind mit hin- und herschwenkenden Abrisskanten 10 ausgestattet, die jeweils getrennt von einem Stellglied 12 angetrieben werden. Der aus den Wurfgebläsen 7 austretende Emtegutstrom 8 wird durch die angetriebenen Abrisskanten 10 beim Austreten aus der Verteileinrichtung 6 umgelenkt und verteilt. Der Verstellbereich der Abrisskanten 10 bestimmt dabei einerseits eine Streubreite 13 des Erntegutstroms 8 und die Geschwindigkeit der Abrisskante 10 andrerseits eine Verteilung V des Erntegutstromes 8 auf dem Boden 19 (Fig. 3). Hinter den Wurfgebläsen 7 sind mehrere Flugbahnen 14 der verteilten Erntegutmenge 8 dargestellt, wobei die Enden der äußeren Flugbahnen 14 die Streubreite 13 nach Außen begrenzen. In Erntefahrtrichtung FR hinter der Streubreite 13 befindet sich die Austragsfläche 15, auf der der Erntegutstrom 8 gleichschichtig verteilt liegt. Auf diese Austragsfläche 15 ist die an der Rückseite des Mähdreschers 1 installierte Infrarotkamera 17 gerichtet.

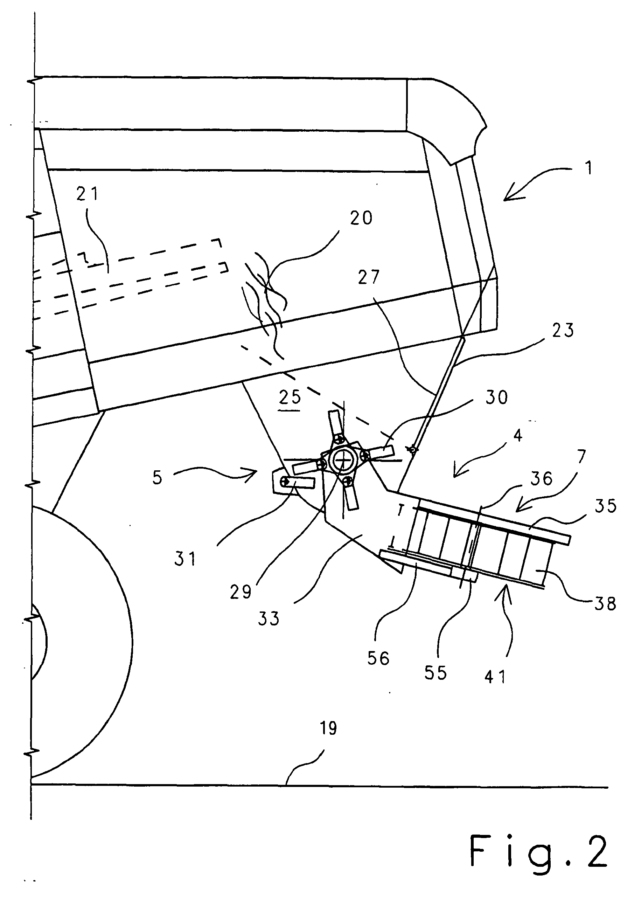

Die Wurfgebläse 7 lagern auf einem Rahmen 33 der außerhalb des Häckslergehäuses 25 auf der Häckslerwelle 29 gelagert ist. Mit dem Rahmen 33 ist ein nach hinten auskragendes Abdeckblech 35 (siehe Fig.2) verbunden, in dem die Rotationsachsen 36 antreibbar gelagert sind. Die Rotationsachsen 36 sind mit flexiblen Wurfschaufeln 38 besetzt, die unterseitig von einer mitrotierenden Scheibe 41 begrenzt werden sind. Zwischen den beiden aus dem oberen Abdeckblech 35, den rotierenden Achsen 36, den Wurfschaufeln 38 und den Scheiben 41 gebildeten Wurfgebläsen 7 ist ein V-förmiges Guttrennblech 42 angeordnet, dessen Spitze 43 gegen den von der Häcksel- und Verteilvorrichtung 6 kommenden Erntegutstrom 8 gerichtet ist. Die beiden Schenkel 44 des Guttrennblechs 42 schließen einen Raum zwischen sich ein und bilden starre Teilummantelungen 46 für die Wurfgebläse 7. An diese starren Teilummantelungen 46 schließen sich bewegliche Teilummantelungen 48 an, die aus einem weiteren Wandungsteil 50 bestehen. Das Wandungsteil 50 ist an einem Winkelhebel 52 befestigt, der auf einem Zapfen 53 drehbar aufgesetzt ist. Letzterer ist mit einer Quertraverse 55 fest verbunden, die über seitliche Längsträger 56 an dem Rahmen 33 befestigt ist. An dem anderen Ende des Winkelhebels 52 ist ein Stellglied 12 angelenkt, das seinerseits gelenkig mit der Quertraverse 55 verbunden ist und die Teilummantelungen 48 antreibt. Beide angetriebenen Teilummantelungen 48 bilden eine in Rotationsrichtung laufende Abrisskante 10 einer Auslassöffnung des Wurfgebläses 7.

Fig.2 zeigt eine Seitenansicht des rückwärtigen Ausschnitts des Mähdreschers 1. Das von hier nicht näher erläuterten und an sich bekannten Arbeitsorganen im Mähdrescher 1 vom Erntegut abgetrennte Stroh 20 gelangt über Hordenschüttler 21 in den hinteren Bereich des Mähdreschers 1. An der Gehäuserückwand 23 eines Häckslergehäuses 25 ist eine in zwei Stellungen verschwenkbare Schwadklappe 27 angebracht. In der Schwadstellung SW (gestrichelt dargestellt) rutscht das von den Hordenschüttlern 21 auf die Schwadklappe 27 fallende Stroh 20 über die Häcksel- und Verteileinrichtung 4 hinweg und wird im Schwad auf dem Feld abgelegt (nicht dargestellt). In einer Häckselstellung HA der Schwadklappe 27 fällt das Stroh 20 auf das Häckselorgan 5. Das Häckselorgan 5 weist eine rotierende Häckslerwelle 29 auf, die in dem Häckslergehäuse 25 gelagert ist. Die Häckslerwelle 29 ist mit beweglichen Messern 30 besetzt, die mit im in dem Häckslergehäuse 25 fest angeordneten Gegenmessem 31 kämmen. Mit diesen Messern 30, 31 wird das Stroh 20 zu Häckselgut 11 zerkleinert und radial in die zwei Wurfgebläse 7 gefördert.

Der in Fig.1 dargestellte Mähdrescher weist an verschiedenen Stellen unterschiedliche Sensoren auf. Hierzu zählt zum einen ein Sensor 57, der die Arbeitsbreite 3 des Schneidwerks 2 erkennt. Im Bereich der Wurfgebläse 7 sind Drehwinkelsensoren 58 angeordnet, die die Position der Abrisskanten 10 detektieren. Auf der Heckseite des Mähdreschers 1 ist weiterhin eine Sensiereinheit 16 installiert.

Bei einem ersten Ausführungsbeispiel wird die Arbeitsbreite 3 des Schneidwerks 2 über den Sensor 57 am Mähdrescher 1 automatisch erkannt. Der Sensor 57 erzeugt ein von der Arbeitsbreite 3 des Schneidwerks 2 abhängiges Schneidwerksbreitensignal Y, sobald ein Schneidwerk 2 montiert ist. Das Schneidwerksbreitensignal Y wird an eine mit dem Sensor 57 verbundene Steuereinheit 40 übertragen.

Die Position der Abrisskante 10 wird mit dem Drehwinkelsensor 58 gemessen, der mit der Steuereinheit 59 verbunden ist. Der Drehwinkelsensor 58 erzeugt ein Signal X, das sich proportional zum Drehwinkel A des Winkelhebels 52 um die Rotationsachse 36 ändert.

In der Steuereinheit 59 ist ein Kennfeld 60 mit mehreren Funktionskurven 61 für verschiedene Schneidwerke 2 gespeichert, das die lageabhängige Geschwindigkeit und den Verstellbereich des Stellgliedes 12 regelt. Mit dem Schneidwerksbreitensignal Y wird eine zugehörige Funktionskurve 61 aus dem Kennfeld 60 ausgewählt und in Abhängigkeit vom Signal X ein Steuerbefehl Z aus der Funktionskurve 61 festgelegt und an das Stellglied 12 übermittelt.

Um den Einfluss von weiteren Störgrößen 62 zu berücksichtigen, können mit den festgelegten Funktionskurven 61 und den weiteren Störgrößen 62 verzerrte Funktionskurven 63 von der Steuereinheit 59 errechnet werden. Zu den Störgrößen 62 gehören Erntegutparameter wie die Strohmenge, die Fahrgeschwindigkeit, die Windstärkel bzw. -richtung, die Neigung.

Fig.3 zeigt eine Rückansicht auf einen Mähdrescher 1, mit einer auf die Austragsfläche 15 gerichteten Infrarotkamera 17. Auf der Austragsfläche 15 liegt der verteilte Erntegutstrom auf dem Boden 19. Der Boden 19 mit dem verteilten Erntegutstrom ist im Querschnitt dargestellt, so dass ein Schichtdickenprofil SD des Erntegutstroms über die Streubreite 13 dargestellt ist. An dem Schichtdickenprofil SD ist eine Verteilung V des Erntegutstroms erkennbar.

Die an der Rückseite des Mähdreschers 1 angebrachte, auf die Austragsfläche 15 gerichtete Infrarotkamera 17 erzeugt ein Bildsignal B der Austragsfläche 15. Die Bildsignale B werden der mit der Infrarotkamera 17 verbundenen Steuereinheit 59 zugeführt.

Die Steuereinheit 59 erstellt mit den Bildsignalen B und den Signalen X ein Temperaturprofil T. Das Temperaturprofil T ist proportional zum Schichtdickenprofil SD, an dem die Verteilung V des Stroh-/Spreugemischs auf der Austragsfläche 15 erkennbar ist.

Die Vergleichbarkeit des Temperaturprofils T mit dem Schichtdickenprofil SD basiert auf der Grundlage, dass unterschiedliche Erntegutmengen auf dem Feld zu unterschiedlichen Oberflächentemperaturen auf dem Feld führen.

Die Steuereinheit 59 wertet das Temperaturprofil T aus indem ein Oberflächenprofil O generiert wird. Die Steuereinheit 59 übermittelt einen Steuerbefehl Z an das Stellglied 12, die das Stellglied 12 in Abhängigkeit vom Oberflächenprofil O derart regelt, dass die Verteilung V mit dem Ziel geändert wird, dass die Temperatur auf der Austragsfläche 15 an allen Stellen gleich ist.

Beide Verfahren lassen sich miteinander kombinieren, wobei das Schneidwerk 2 beispielsweise den Schwenkbereich der Abrisskante 10 und somit die Streubreite 13 regelt während die Verteilung V zur Regelung der Geschwindigkeit der bewegten Abrisskante 10 herangezogen wird.

Die Oberfläche der Austragsfläche 15 kann bei einem weiteren Ausführungsbeispiel mit einem Lasersensor 18 abgetastet werden, um die Verteilung zu detektieren. Aus den ermittelten Messdaten wird ein Oberflächenprofil O erstellt.

Die Steuereinheit 59 wertet das Oberflächenprofil O aus und übermittelt einen Steuerbefehl Z an das Stellglied 12 der das Stellglied 12 in Abhängigkeit vom Oberflächenprofil O derart regelt, dass die Verteilung V mit dem Ziel geändert wird, dass die Oberfläche der Austragsfläche 15 möglichst plan ist.

Die Vergleichbarkeit des Oberflächenprofils O mit dem Schichtdickenprofil SD ist unter der Annahme möglich, dass der Boden 19 auf dem der Erntegutstrom abgelegt wird annähernd plan ist und beide proportional voneinander abhängig sind.

Das Oberflächenprofil O wird an die Steuereinheit 59 übermittelt, die das Profil auswertet und das Stellglied 12 abhängig vom Oberflächenprofil O regelt.

Die Erfindung ist nicht auf die beschriebenen Ausführungsbeispiele beschränkt sondern kann an beliebigen Erntemaschinen eingesetzt werden, um die beschriebenen Effekte zu erzielen.

### Bezugszeichenliste:

- 1: Erntemaschine
- 2: Schneidwerk
- 3: Arbeitsbreite
- 4: Häcksel- und Verteileinrichtung
- 5: Häckselorgan
- 6: Verteileinrichtung
- 7: Wurfgebläse
- 8: Erntegutmenge
- 10: Abrisskante
- 11: Antrieb
- 12: Stellglied
- 13: Streubreite
- 14: Flugbahnen
- 15: Austragsfläche
- 16: Sensiereinheit
- 17: Infrarotkamera
- 18: Lasersensor
- 19: Boden
- 20: Stroh
- 21: Hordenschüttler
- 23: Gehäuserückwand
- 25: Häckslergehäuse
- 27: Schwadklappe
- 29: Häckslerwelle
- 30: Bewegliches Messer
- 31: Festes Messer
- 33: Rahmen
- 35: Abdeckblech
- 36: Rotationsachse
- 38: Wurfschaufeln
- 41: Scheibe
- 42: Guttrennblech
- 43: Spitze
- 44: Schenkel
- 46: Starre Teilummantelung
- 48: Bewegliche Teilummantelung
- 50: Wandungsteil
- 52: Winkelhebel
- 53: Zapfen
- 55: Quertraverse
- 56: Längsträger
- 57: Sensor
- 58: Drehwinkelsensor
- 59: Steuereinheit
- 60: Kennfeld
- 61: Funktionskurven
- 62: Störgrößen
- 63: Verzerrte Funktionskurven
- V: Verteilung
- B: Bildsignal
- X: Abrisskantensignal
- Y: Arbeitsbreitensignal
- Z: Stellgliedbefehl

## Patentansprüche

1. Verfahren zum Betreiben einer mit einem Schneidwerk (2) ausgestatteten selbstfahrenden Erntemaschine (1) mit einer im abgabeseitigem Bereich angeordneten Häcksel- und Verteileinrichtung (4), von der aus ein Erntegutstrom in wenigstens ein Wurfgebläse (7) gefördert wird, welches mit wenigstens einer mittels eines Antriebs (11) lageveränderlichen Abrisskante (10) zur Verstellung der Austrittsrichtung des Erntegutstromes aus dem Wurfgebläse (7) versehen ist,
**dadurch gekennzeichnet,**
**dass** der Antrieb (11) zur Verstellung der wenigstens einen Abrisskante (10) in Abhängigkeit von der Arbeitsbreite (3) des Schneidwerks (2) geregelt wird.

2. Verfahren zum Betreiben einer mit einem Schneidwerk (2) ausgestatteten selbstfahrenden Erntemaschine (1) nach Anspruch 1,
**dadurch gekennzeichnet,**
**dass** die Verstellung der Abrisskante (10) über ein elektrohydraulisches Stellglied (12) erfolgt, das mit einer Steuereinheit (59) verbunden ist.

3. Verfahren zum Betreiben einer mit einem Schneidwerk (2) ausgestatteten selbstfahrenden Erntemaschine (1) nach Anspruch 2,
**dadurch gekennzeichnet,**
**dass** die Verstellung des Stellgliedes (12) über einen Drehwinkelsensor (58) detektiert wird, der mit der Steuereinheit (59) verbunden ist.

4. Verfahren zum Betreiben einer mit einem Schneidwerk (2) ausgestatteten selbstfahrenden Erntemaschine (1) nach mindestens einem der vorhergehenden Ansprüche 2 oder 3,
**dadurch gekennzeichnet,**
**dass** das Schneidwerk (2) über einen mit der Steuereinheit (59) verbundenen Sensor (57) detektiert wird und der Sensor (57) ein der Arbeitsbreite (3) des Schneidwerks (2) entsprechendes Schneidwerksbreitensignal (Y) an die Steuereinheit (59) übergibt.

5. Verfahren zum Betreiben einer mit einem Schneidwerk (2) ausgestatteten selbstfahrenden Erntemaschine (1) nach Anspruch 4,
**dadurch gekennzeichnet,**
**dass** ein in der Steuereinheit (59) gespeichertes Kennfeld (60) mehrere Funktionskurven (61) für verschiedene Schneidwerke (2) beinhaltet und mit dem der Arbeitsbreite (3) des Schneidwerks (2) entsprechenden Schneidwerksbreitensignal (Y) die zugehörige Funktionskurve (61) aus dem Kennfeld (60) ausgewählt wird.

6. Verfahren zum Betreiben einer mit einem Schneidwerk (2) ausgestatteten selbstfahrenden Erntemaschine (1) nach Anspruch 5,
**dadurch gekennzeichnet,**
**dass** das Stellglied (12) über die zugehörige Funktionskurve (61) geregelt wird.

7. Verfahren zum Betreiben einer mit einem Schneidwerk (2) ausgestatteten selbstfahrenden Erntemaschine (1) nach mindestens einem der vorhergehenden Ansprüche 5 oder 6,
**dadurch gekennzeichnet,**
**dass** in der Steuereinheit (59) mit der Funktionskurve (61) und wenigstens einer weiteren Störgröße (62) eine verzerrte Funktionskurve (63) errechnet wird.

## Claims

1. A method of operating a self-propelled harvester (1) equipped with a cutting mechanism (2), having a chopping and distributing device (4) which is arranged in the discharge-side region and from which a flow of crop material is conveyed into at least one ejection blower (7) provided with at least one break-away edge (10) which is variable in position by means of a drive (11), for adjusting the direction in which the flow of crop material issues from the ejection blower (7),
**characterised in that**
the drive for adjustment of the at least one break-away edge (10) is regulated in dependence on the working width (3) of the cutting mechanism (2).

2. A method of operating a self-propelled harvester (1) equipped with a cutting mechanism (2) according to claim 1 **characterised in that** adjustment of the break-away edge (10) is effected by way of an electrohydraulic control member (12) connected to a control unit (59).

3. A method of operating a self-propelled harvester (1) equipped with a cutting mechanism (2) according to claim 2 **characterised in that** adjustment of the control member (12) is detected by way of a rotary angle sensor (58) connected to the control unit (59).

4. A method of operating a self-propelled harvester (1) equipped with a cutting mechanism (2) according to at least one of preceding claims 2 and 3 **characterised in that** the cutting mechanism (2) is detected by way of a sensor (57) connected to the control unit (59) and the sensor (57) passes to the control unit (59) a cutting mechanism width signal (Y) corresponding to the working width (3) of the cutting mechanism (2).

5. A method of operating a self-propelled harvester (1) equipped with a cutting mechanism (2) according to claim 4 **characterised in that** a characteristic field (60) stored in the control unit (59) contains a plurality of function curves (61) for different cutting mechanisms (2) and with the cutting mechanism width signal (Y) corresponding to the working width (3) of the cutting mechanism (2) the associated function curve (61) is selected from the characteristic field (60).

6. A method of operating a self-propelled harvester (1) equipped with a cutting mechanism (2) according to claim 5 **characterised in that** the control member (12) is regulated by way of the associated function curve (61).

7. A method of operating a self-propelled harvester (1) equipped with a cutting mechanism (2) according to at least one of preceding claims 5 and 6 **characterised in that** a distorted function curve (63) is calculated in the control unit (59) with the function curve (81) and at least one further disturbance variable (62).

## Revendications

1. Procédé de fonctionnement d'une machine de récolte (1) automotrice équipée d'un mécanisme de coupe (2) et comportant un dispositif broyeur et éparpilleur (4) disposé dans la zone d'éjection, depuis lequel un flux de produit récolté est acheminé jusqu'à au moins une soufflante d'éjection (7) pourvue d'un bord de décollement (10) dont la position peut être modifiée au moyen d'un dispositif d'entraînement (11) aux fins de régler la direction de sortie du flux de produit récolté éjecté hors de la soufflante d'éjection (7),
**caractérisé par le fait que**
le dispositif d'entraînement (11) pour le déplacement du bord de décollement (10) au nombre d'au moins un est réglé en fonction de la largeur de travail (3) du mécanisme de coupe (2).

2. Procédé de fonctionnement d'une machine de récolte (1) automotrice équipée d'un mécanisme de coupe (2) selon la revendication 1, **caractérisé par le fait que** le déplacement du bord de décollement (10) a lieu par l'intermédiaire d'un actionneur (12) qui est relié à une unité de commande (59).

3. Procédé de fonctionnement d'une machine de récolte (1) automotrice équipée d'un mécanisme de coupe (2) selon la revendication 1, **caractérisé par le fait que** le réglage de l'actionneur (12) est détecté par un capteur d'angle de rotation (58) qui est relié à une unité de commande (59).

4. Procédé de fonctionnement d'une machine de récolte (1) automotrice équipée d'un mécanisme de coupe (2) selon au moins une des revendications 2 ou 3 précédentes, **caractérisé par le fait que** le mécanisme de coupe (2) est palpé par l'intermédiaire d'un capteur (57) relié à une unité de commande (59) et que le capteur (27) transmet à l'unité de commande (59) un signal (Y) de largeur de mécanisme de coupe qui correspond à la largeur de travail (3) du mécanisme de coupe (2).

5. Procédé de fonctionnement d'une machine de récolte (1) automotrice équipée d'un mécanisme de coupe (2) selon la revendication 4, **caractérisé par le fait qu'**un diagramme caractéristique (60) mémorisé dans l'unité de commande (59) comporte plusieurs courbes de fonctionnement (61) pour différents mécanismes de coupe (2) et que, sur la base du signal (Y) de largeur de mécanisme de coupe correspondant à la largeur de travail (3) du mécanisme de coupe (2), la courbe de fonctionnement (61) correspondante est sélectionnée sur le diagramme.

6. Procédé de fonctionnement d'une machine de récolte (1) automotrice équipée d'un mécanisme de coupe (2) selon la revendication 5, **caractérisé par le fait que** l'actionneur (12) est réglé via la courbe de fonctionnement (61) correspondante.

7. Procédé de fonctionnement d'une machine de récolte (1) automotrice équipée d'un mécanisme de coupe (2) selon au moins une des revendications 5 ou 6 précédentes, **caractérisé par le fait que** dans l'unité de commande au moins une courbe de fonctionnement (63) déformée est calculée à partir de la courbe de fonctionnement (61) et d'au moins une grandeur perturbatrice (62).
